Europäisches Patentamt

European Patent Office

Office européen des brevets

(19)

(11) Numéro de publication : **0 192 548**
**B1**

# (12) FASCICULE DE BREVET EUROPÉEN

(45) Date de publication du fascicule du brevet :
**09.11.88**

(51) Int. Cl.⁴ : **G 21 C 17/00, G 21 C 17/08**

(21) Numéro de dépôt : **86400255.5**

(22) Date de dépôt : **06.02.86**

(54) Procédé et dispositif de contrôle à distance et sous eau d'une pièce de petites dimensions d'un réacteur nucléaire.

(30) Priorité : **12.02.85 FR 8501968**

(43) Date de publication de la demande :
**27.08.86 Bulletin 86/35**

(45) Mention de la délivrance du brevet :
**09.11.88 Bulletin 88/45**

(84) Etats contractants désignés :
**AT BE CH DE GB IT LI LU NL SE**

(56) Documents cités :
**EP-A- 0 055 647**
**FR-A- 2 304 149**

(73) Titulaire : **ELECTRICITE DE FRANCE Service National**
**2, rue Louis Murat**
**F-75008 Paris (FR)**

(72) Inventeur : **Beuglot, Marcel**
**10 Les Galamières**
**F-01800 Meximieux (FR)**

(74) Mandataire : **Moncheny, Michel et al**
**c/o Cabinet Lavoix 2 Place d'Estienne d'Orves**
**F-75441 Paris Cedex 09 (FR)**

Jouve, 18, rue St-Denis, 75001 Paris, France

## Description

L'invention concerne un procédé et un dispositif de contrôle à distance et sous eau d'une pièce de petites dimensions d'un réacteur nucléaire, pour vérifier l'état de la liaison de cette pièce avec une structure dans laquelle elle est située dans une position peu accessible.

Dans les réacteurs nucléaires tels que les réacteurs nucléaires à eau sous pression, il existe des pièces de petites dimensions placées à l'intérieur de structures complexes en position peu accessible, si bien que leur contrôle est difficile à réaliser. De plus, après un certain temps de séjour dans le réacteur, ces structures sont contaminées par des produits radioactifs et il est nécessaire d'en effectuer le contrôle et la réparation à distance et sous eau.

Le rôle de certaines pièces de petites dimensions dans les équipements internes d'un réacteur nucléaire peut être extrêmement important et pour des questions de sécurité, il est nécessaire de s'assurer de la parfaite intégrité de ces pièces. Il est de toutes façons nécessaire de s'assurer, lors de l'entretien du réacteur nucléaire, qu'aucune pièce à l'intérieur de la cuve n'est susceptible de se détacher de la structure sur laquelle elle est fixée.

Dans le cas des équipements internes supérieurs du réacteur nucléaire qui comportent en particulier l'ensemble des tubes de guidage des barres de commande du réacteur, la partie inférieure des tubes de guidage comporte des broches de centrage qui sont destinées à venir se placer dans des trous prévus dans la plaque supérieure du cœur du réacteur. Ces broches de centrage ont une grande importance puisqu'elles déterminent la position du tube de guidage des barres de commande par rapport à l'assemblage dans lequel seront introduites les barres de commande et donc l'alignement des barres de commande et des tubes guides de cet assemblage. Lors des opérations d'entretien du réacteur à l'arrêt, une des opérations consiste à extraire les équipements internes supérieurs de la cuve et de les disposer sur un stand placé dans la piscine du réacteur, pour effectuer leur contrôle et leur réparation. On vérifie en particulier l'état des broches de centrage des tubes de guidage et de leur écrou de fixation sur la bride inférieure du tube de guidage, en introduisant une caméra de télévision dans la partie centrale du tube de guidage pour la faire parvenir jusqu'à la base du tube, au niveau des broches de centrage. Les écrous des broches qui sont saillants au-dessus de la bride inférieure du tube sont alors visibles et l'on peut vérifier leur présence et leur perpendicularité par rapport à la bride. Cependant, si le fût de la broche de guidage sur lequel est vissé l'écrou est cassé à l'intérieur de la bride, l'écrou peut rester néanmoins placé dans une position correcte sur la bride du tube de guidage. Un simple examen visuel ne permet pas toujours de vérifier l'état de la liaison entre la broche de centrage et la bride du tube guide.

Le but de l'invention est donc de proposer un procédé de contrôle à distance et sous eau d'une pièce de petites dimensions d'un réacteur nucléaire, pour contrôler l'état de la liaison de cette pièce avec une structure dans laquelle elle est située dans une position peu accessible notamment par des moyens télévisuels, procédé qui permette de déterminer dans tous les cas si la liaison entre la pièce et sa structure n'a pas été supprimée par la présence d'une rupture.

Dans ce but, on introduit dans la structure plongée dans l'eau, au voisinage de la pièce à contrôler, un moyen d'injection d'eau sous une pression supérieure à 40 MPa et sous forme d'un jet rectiligne d'un diamètre inférieur à $3 \times 10^{-3}$ m, on oriente le moyen d'injection vers la pièce à contrôler, on injecte de l'eau sous pression de façon que le jet atteigne la pièce et l'on contrôle par les moyens télévisuels la position de la pièce après action du jet.

L'invention concerne également un dispositif conforme à l'objet de la revendication 6 pour la mise en œuvre du procédé de contrôle.

Afin de bien faire comprendre l'invention, on va maintenant décrire, à titre d'exemple, non limitatif, en se référant aux figures jointes en annexe, un mode de mise en œuvre du procédé selon l'invention dans le cas de la vérification des broches de centrage d'un tube guide d'un réacteur nucléaire à eau sous pression et le dispositif de contrôle correspondant. Dans ces figures :

— la Fig. 1 est une vue en élévation d'un tube guide en position dans la cuve du réacteur nucléaire ;

— la Fig. 2 est une section transversale suivant AA de la partie inférieure du tube guide représenté à la Fig. 1, comportant les dispositifs de guidage continu des barres de commande ;

— la Fig. 3a est une vue en élévation avec coupe partielle d'une broche de centrage du tube guide représenté à la Fig. 1 ;

— la Fig. 3b est une vue en élévation avec coupe partielle analogue à la Fig. 3a, d'une broche de centrage présentant une rupture sur toute sa section ;

— la Fig. 4 est une vue schématique de l'ensemble des moyens permettant la mise en œuvre du procédé de contrôle suivant l'invention appliqué aux broches de centrage d'un tube guide ;

— la Fig. 5 est une vue en coupe transversale suivant BB de la Fig. 6 d'un moyen d'injection d'eau permettant la mise en œuvre du procédé suivant l'invention, en position de travail dans un tube guide ;

— la Fig. 6 est une vue en élévation avec coupe partielle de la partie inférieure du dispositif d'injection d'eau représenté à la Fig. 5, en position de travail dans un tube guide.

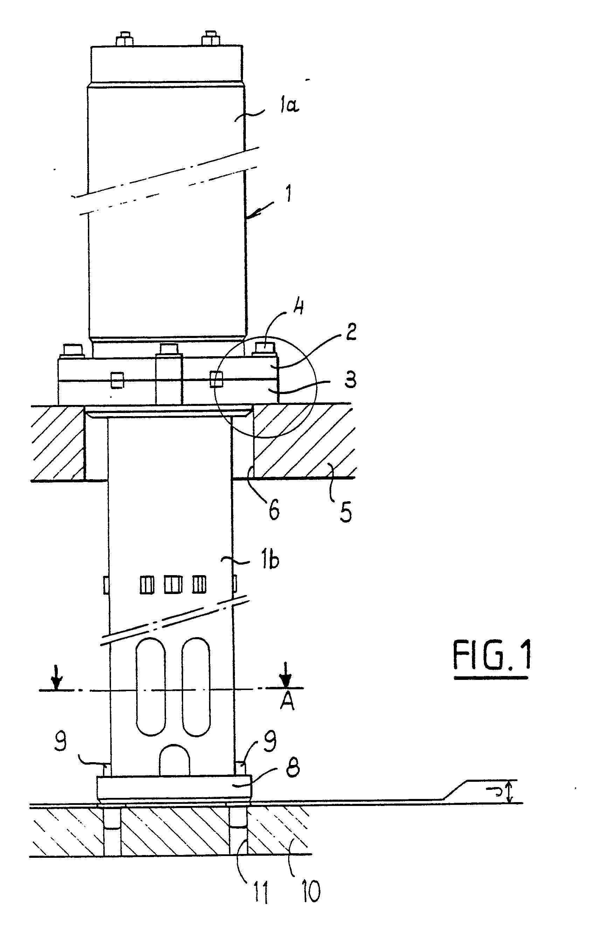

Sur la Fig. 1, on voit un tube guide 1 comportant une partie supérieure 1a et une partie inférieure 1b reliées entre elles par l'intermédiaire de la bride inférieure 2 de la partie 1a du tube, de la bride supérieure 3 de la partie inférieure 1b du tube guide et de vis 4 engagées dans des trous taraudés de la plaque support 5 des tubes guides 1. La plaque support 5 comporte un ensemble d'ouvertures 6 recevant chacune un tube guide dont les brides d'assemblage 2 et 3 reposent sur la face supérieure de la plaque support 5.

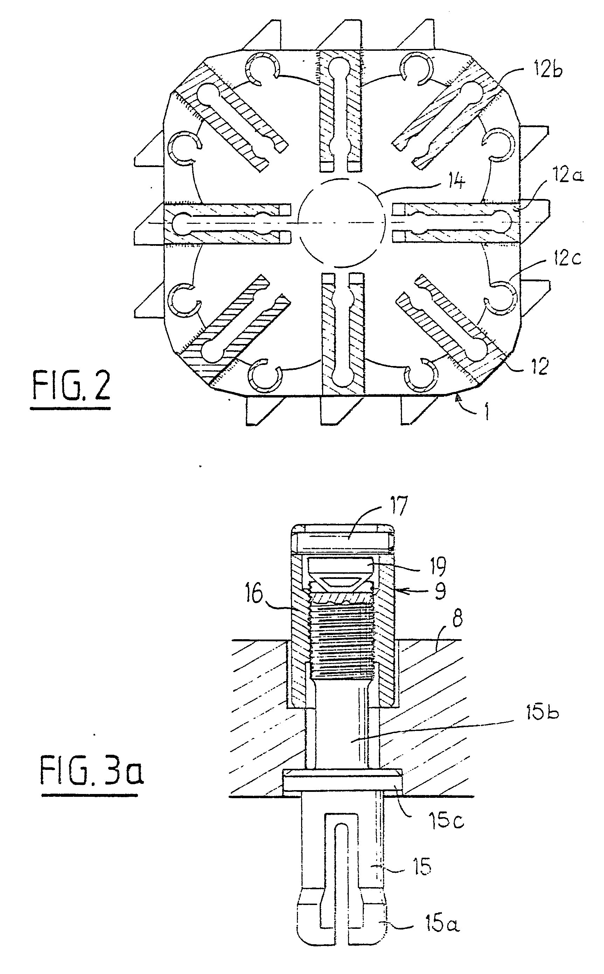

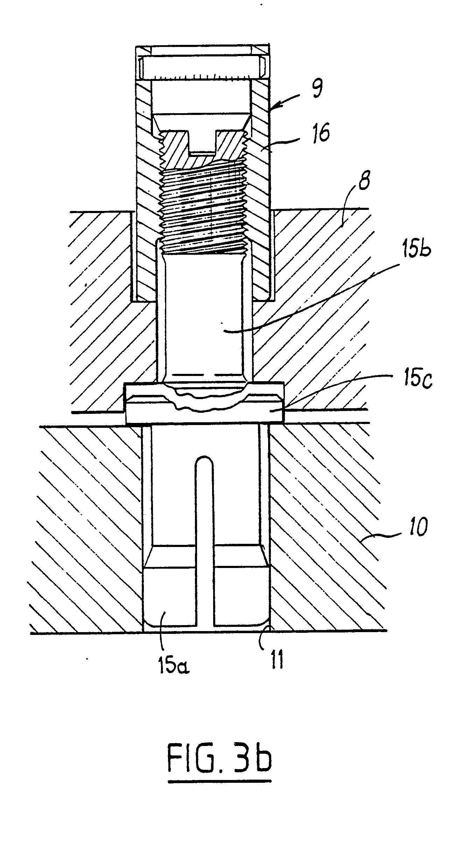

La partie inférieure 1b du tube guide 1 porte une bride 8 sur laquelle sont fixées les broches de centrage 9 qui seront décrites plus en détail en se référant aux Fig. 3a et 3b. La partie inférieure de chaque broche de centrage 9 est engagée dans une ouverture 11 prévue dans la plaque supérieure de cœur 10 du réacteur. Dans la cuve du réacteur, les assemblages combustibles sont disposés sous la plaque 10. Sous chacun des tubes de guidage 1, est placé un assemblage dont les tubes guides peuvent recevoir les crayons absorbants d'une grappe de contrôle, ou barre de commande, mobile à l'intérieur du tube guide 1 et de l'assemblage.

A l'intérieur du tube guide 1, la barre de commande est guidée par un ensemble de dispositifs constitués par des cartes de guidage discontinu dans la partie supérieure du tube 1 et par des fourreaux de guidage continu dans la zone terminale inférieure de la partie 1b du tube 1.

L'assemblage et la rigidité des équipements internes supérieurs sont assurés par des entretoises tubulaires parallèles aux tubes guides 1 et fixées sur la plaque support 5 à leur partie supérieure et à la plaque supérieure de cœur 10 à leur partie inférieure.

Sur la Fig. 2, on voit une section de la zone terminale inférieure du tube guide 1 représenté à la Fig. 1. Les fourreaux de guidage continu 12 sont de trois types différents, les fourreaux 12a et 12b permettant le guidage de deux crayons absorbants de la grappe de contrôle et les fourreaux 12c, le guidage d'un seul crayon. Les fourreaux 12a sont disposés à 90° les uns par rapport aux autres et par rapport aux faces du tube guide 1. Ces fourreaux seront appelés fourreaux à 90°. La partie centrale du tube guide constitue un passage axial libre dans lequel il est possible d'introduire et de déplacer un objet cylindrique 14 tel qu'une caméra de télévision ou un tube de guidage.

Sur les Fig. 3a et 3b, on a représenté l'ensemble 9 constitué par la broche de centrage proprement dite 15 et son écrou de fixation 16. La broche 15 comporte une partie déformable élastiquement 15a destinée à venir se loger dans les trous 11 de la plaque supérieure de cœur 10 et un fût 15b fileté dans sa partie supérieure et relié à la partie 15a de la broche par une collerette 15c. La broche 15 est fixée à l'intérieur d'un trou traversant la bride 8, par serrage de l'écrou 16 et mise en appui de cet écrou 16 sur le fond d'un avant-trou dans la bride 8 et de la collerette 15c sur un rebord à l'intérieur de la bride 8. La fixation de la broche 15 est complétée par soudage d'une goupille 17 engagée dans l'écrou 16 sur une clavette 19 engagée dans le fût 15b de la broche 15. L'ensemble 9 de la broche de guidage et de son écrou est ainsi parfaitement solidaire de la bride 8.

Comme il est visible sur la Fig. 3b, dans le cas où le fût 15b de la broche présente une rupture sur toute sa section dans sa zone faible au voisinage de la collerette 15c, l'écrou 16 et le fût 15b restent engagés dans la bride 8, cependant que la partie 15a de la broche reste insérée dans le trou 11 de la plaque supérieure de cœur 10. L'ensemble 9 de la broche et de son écrou est donc susceptible de rester en position lors du transport des équipements internes supérieurs depuis la cuve du réacteur jusqu'à leur stand de contrôle et de réparation. Un examen télévisuel par l'intérieur du tube guide correspondant, en utilisant une caméra de télévision 14 introduite entre les fourreaux de guidage continu 12a, comme il est visible sur la Fig. 2, n'est pas susceptible de déceler cette défaillance totale de la broche de centrage et la présence d'un élément détaché des équipements internes supérieurs pouvant être entraîné par le fluide de refroidissement du réacteur après son redémarrage.

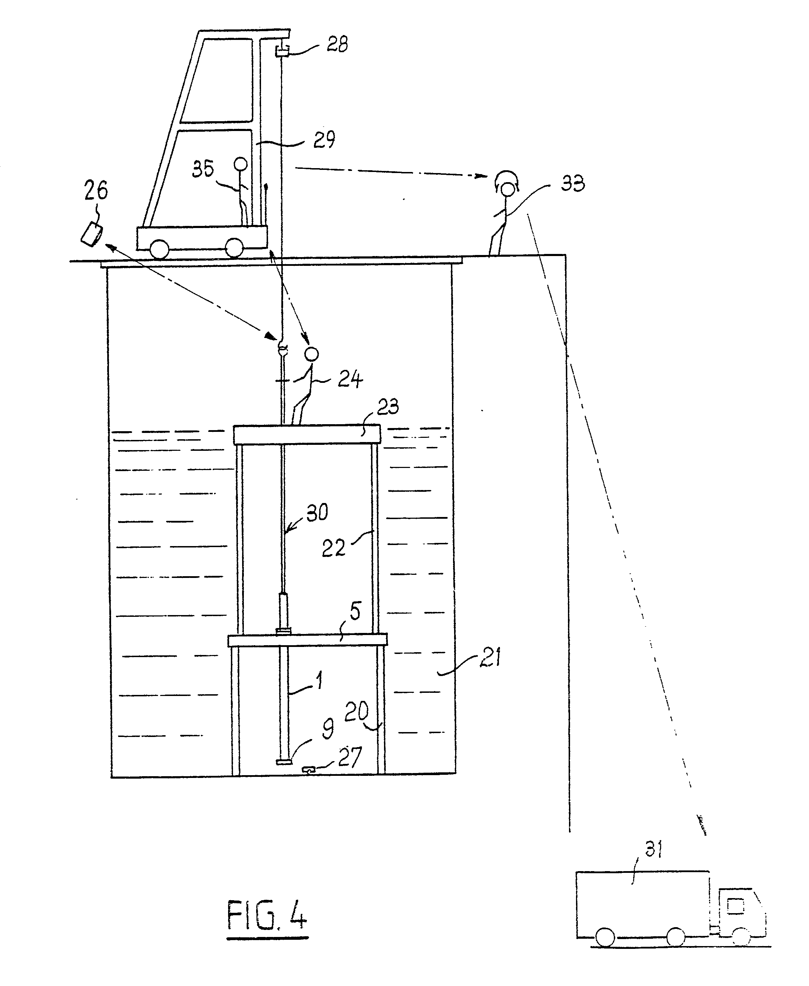

Le procédé suivant l'invention mis en œuvre en utilisant l'installation et les dispositifs représentés aux Fig. 4, 5 et 6 permet d'éviter ces inconvénients et de déterminer de façon très sûre les broches de guidage qui doivent être remplacées.

Sur la Fig. 4, on voit le support de stockage 20 des équipements internes supérieurs d'un réacteur nucléaire dont on a représenté uniquement la plaque de support 5 et un tube guide 1. Le support 20 repose sur le fond de la piscine du réacteur 21. Ce support est surmonté par une plateforme 22 dont la partie supérieure 23 est rotative. Un opérateur 24 peut assurer la mise en place et la mise en œuvre correcte du dispositif de contrôle depuis la plateforme rotative 23. Il dispose de l'image de la partie inférieure des équipements internes grâce à un écran de contrôle 26 relié à une caméra 27 se déplaçant sur le fond de la piscine 21 sous les équipements internes. L'ensemble du dispositif 30 de contrôle est suspendu au palan 28 de la machine de chargement 29 du réacteur qui peut se déplacer au-dessus de la piscine 21. Une installation de pompage haute pression 31 permet d'amener de l'eau sous très forte pression ($50 \times 10^6$ Pa) par l'intermédiaire d'une conduite non représentée, à l'extrémité d'entrée du dispositif 30. L'installation de pompage 31 qui peut être mobile est amenée à proximité de la piscine 21 du réacteur. Un opérateur 33 assure la liaison entre l'opérateur 24 et la station de pompage 31. Enfin, l'opérateur 35 pilotant la machine de chargement synchronise son action avec celle de l'opérateur 24 pour la mise en place du dispositif 30 dans le tube guide 1.

Sur la Fig. 4, on a représenté la phase du contrôle consistant à introduire le dispositif 30 constitué par un tube de grande longueur dans l'espace central et axial du tube guide 1, ce tube 30 ayant un contour extérieur tel que représenté en 14 sur la Fig. 2. L'extrémité supérieure du tube guide 1 est sous plusieurs mètres d'eau et l'introduction se fait par contrôle visuel à la verticale du tube 1.

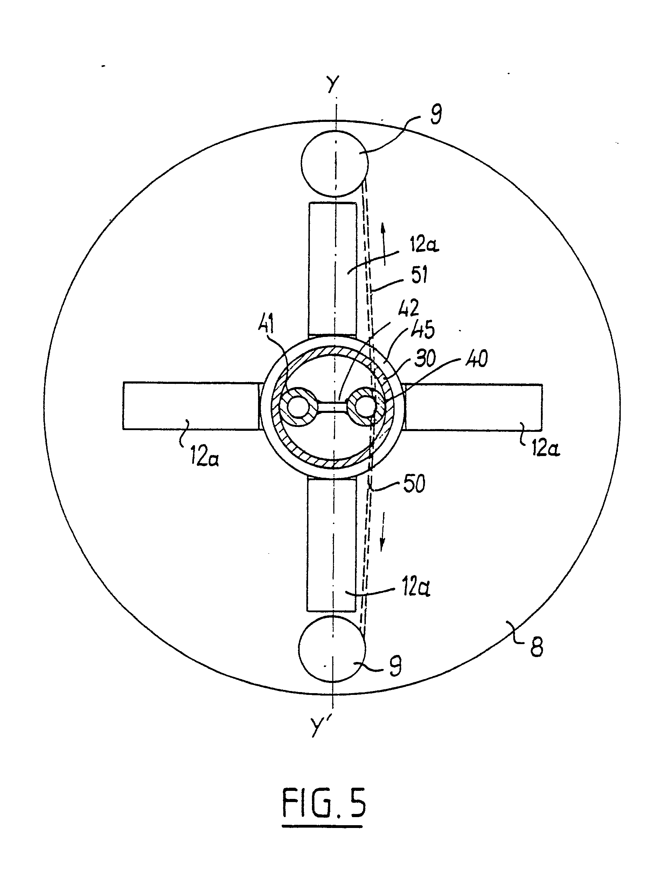

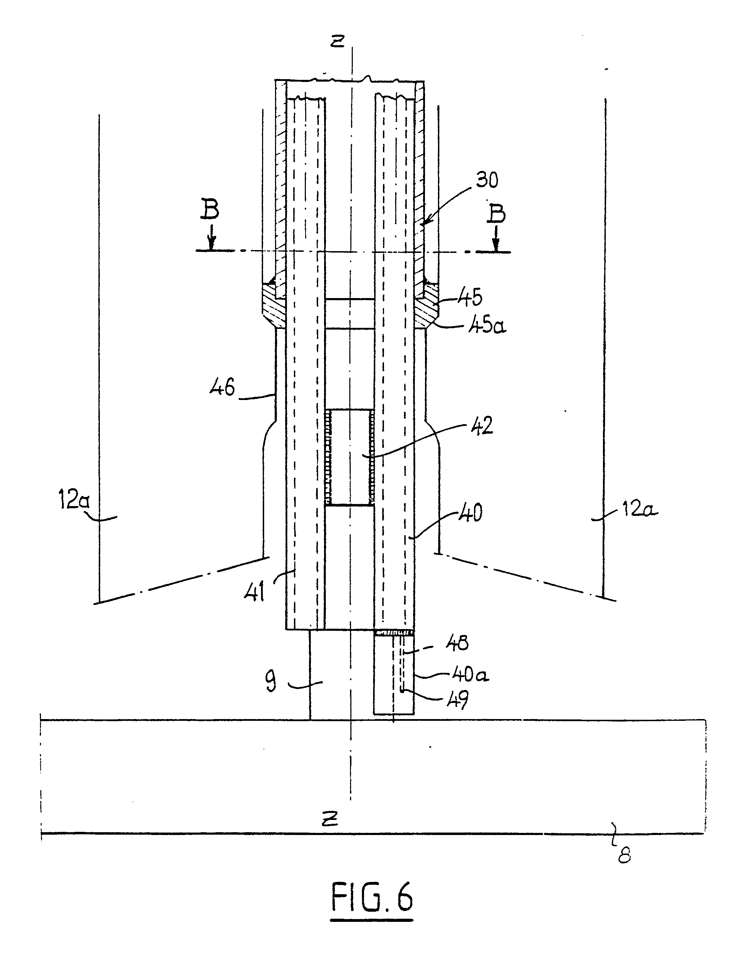

Sur les Fig. 5 et 6, on voit plus en détail le dispositif de contrôle qui comporte, à l'intérieur du tube 30, un ensemble constitué par un tube d'injection d'eau sous pression 40 et un tube de rigidification 41 à axe parallèle à l'axe ZZ' du tube 30, assemblés par des entretoises telles que 42 réparties suivant leur longueur. L'écartement des tubes 40 et 41 est tel que leurs génératrices les plus éloignées soient espacées d'une distance sensiblement égale au diamètre intérieur du tube 30. On obtient ainsi un guidage parfait de l'ensemble 40-41-42 qui est monté mobile à l'intérieur du tube 30.

A la partie supérieure du tube 30, au-dessus de la plateforme 23 où se trouve l'opérateur 24, l'ensemble 40-41-42 monté coulissant dans le tube 30, lui-même fixé au palan 28 de la machine de chargement 29, est fixé à un dispositif de manipulation permettant son déplacement axial et son orientation très précise autour de l'axe ZZ'.

Une bague 45 est fixée à la partie inférieure du tube 30. Cette bague 45 a un diamètre extérieur lui permettant de coulisser de façon parfaitement guidée entre les fourreaux 12a à 90° dans la partie inférieure du tube guide 1. Cette bague 45 comporte également une portée tronconique 45a venant en appui à la fin du mouvement de descente du tube 30 sur des ressauts 46 en saillie par rapport au bord intérieur des fourreaux 12a. Dans son mouvement de descente, le tube 30 est donc arrêté dans une position définie de façon très précise par rapport à la face supérieure de la bride 8 et aux parties saillantes des écrous des ensembles broche et écrou 9.

Le tube d'injection 40 comporte une partie inférieure 40a prolongée en dessous de l'extrémité inférieure du tube de rigidification 41, percée d'un canal d'injection 48 et d'une buse calibrée 49 dont le diamètre est de $1,3 \times 10^{-3}$ m. La buse 49 est constituée de deux parties légèrement inclinées angulairement dont les axes sont dans un plan perpendiculaire à l'axe ZZ' du tube 30, pour la projection de deux jets rectilignes calibrés 50 et 51 comme il est visible sur la Fig. 5 ; les jets 50 et 51 font un angle de 3° avec l'axe YY' des deux fourreaux 12a derrière lesquels sont situés les broches 9.

Lorsque le tube 30 est en position basse, la bague 45 étant en butée sur les ressauts 46, l'opérateur 24 descend l'ensemble 40-41-42 de façon à amener la buse 49 au niveau de la partie saillante des broches 9. Cette mise en place verticale est parfaitement définie par les caractéristiques dimensionnelles du tube guide. L'opérateur oriente ensuite la buse 49 de façon que ses deux parties soient dirigées simultanément vers l'une et l'autre des deux parties saillantes des broches 9 comme représenté sur la Fig. 5. Cette orientation du tube d'injection doit être contrôlée de façon très précise grâce à la caméra, puisque la partie accessible de la broche est de très faible étendue.

Lorsque cette mise en place et cette orientation sont réalisées de façon très précise et contrôlées par la caméra de télévision, de l'eau à haute pression (50 MPa) est envoyée dans le tube 40. Cette eau sous pression pénètre dans le conduit d'injection 48 communiquant avec le tube 40 puis dans les buses 49 pour constituer les jets 50 et 51 venant frapper les broches 9 avec une force suffisante pour déplacer et éjecter l'écrou 16 et le fût 15b de la broche dans le cas où ce fût présente une rupture sur toute sa section comme représenté à la Fig. 3b. En effet, le jet fin parfaitement rectiligne et à haute pression possède une quantité de mouvement suffisante pour se propager dans l'eau de la piscine jusqu'à la broche 9 et exercer sur celle-ci une poussée suffisante pour l'éjecter de l'avant-trou dans la bride 8.

Dans le cas où la broche 9 ne présente pas de rupture, le jet sous pression n'est pas susceptible de déplacer la partie saillante de la broche.

Le jet d'eau sous forte pression constituant un faisceau parallèle de très faible diamètre et le dispositif permettant de le produire ont été appelés hydrolaser par analogie avec le laser optique.

Après action du jet sous pression sur les broches 9 d'un tube guide 1, on remonte le tube d'injection à l'intérieur du tube 30, puis le tube 30 est sorti du tube guide 1 grâce au palan 28 de la machine de chargement 29. On descend une caméra de télévision suspendue à l'extrémité d'un câble, en utilisant un palan de la machine de chargement, dans l'espace central axial du tube guide 1, jusqu'à l'amener au niveau de la face supérieure de la bride 8. La caméra de télévision permet alors de vérifier la présence et la position des parties saillantes des broches 9. Si l'une au moins des broches 9 est déplacée ou éjectée, le tube 1 est démonté et amené vers un stand de réparation pour l'équiper d'une nouvelle broche.

On voit que les principaux avantages du procédé et du dispositif suivant l'invention sont de permettre un contrôle extrêmement efficace de petites pièces dans une structure complexe telles que des broches de centrage dans un tube guide, en exerçant une action sur une partie de la pièce pour la déplacer ou l'éjecter et d'éviter l'utilisation de dispositifs mécaniques dont l'introduction et la mise en œuvre dans la structure du tube guide seraient pratiquement impossibles ou très difficiles à réaliser.

L'invention ne se limite pas au mode de réalisation qui a été décrit.

C'est ainsi qu'on peut utiliser un hydrolaser dont les caractéristiques sont différentes de celles qui ont été décrites, le diamètre du jet pouvant être différent de 1,3 mm et la pression différente de 50 MPa ($50 \times 10^6$ Pa). On peut utiliser pour mettre en œuvre le procédé dans de bonnes conditions, des jets d'un diamètre de 1 à 3 mm sous une pression de 40 à 100 MPa. En dehors de ces intervalles pour le diamètre du jet et pour la pression, on n'aurait plus à proprement parler un effet du type hydrolaser, c'est-à-dire un jet énergétique parfaitement dirigé utilisable sous quelques mètres d'eau.

Le dispositif d'injection peut être d'un type différent de celui qui a été décrit et le moyen d'inspection de la pièce après l'action de l'hydrolaser peut être d'un type quelconque tel qu'utilisé actuellement dans les réacteurs nucléaires.

Le procédé et le dispositif suivant l'invention s'appliquent non seulement au contrôle des broches de guidage des tubes guides des équipements internes supérieurs d'un réacteur nucléaire à eau sous pression mais encore à d'autres pièces ou composants de petites dimensions du réacteur, tels que des écrous, des vis ou des clavettes.

Le procédé et le dispositif s'appliquent de manière générale dans tous les réacteurs nucléaires dont on effectue le contrôle et l'entretien sous eau ou encore dans toutes les installations industrielles qui demandent des précautions particulières pour leur entretien ou leur réparation conduisant à opérer sous eau et à distance.

**Revendications**

1. Procédé de contrôle à distance et sous eau d'une pièce (9) de petites dimensions d'un réacteur nucléaire, pour contrôler l'état de la liaison de cette pièce (9) avec une structure (1) dans laquelle elle est située dans une position peu accessible notamment par des moyens télévisuels, caractérisé par le fait qu'on introduit dans la structure (1) plongée dans l'eau, au voisinage de la pièce (9) à contrôler, un moyen (30-40) d'injection d'eau, sous une pression supérieure à 40 MPa et sous forme d'un jet (50-51) rectiligne d'un diamètre inférieur à $3 \times 10^{-3}$ m, qu'on oriente le moyen d'injection (40) vers la pièce (9) à contrôler, qu'on injecte de l'eau sous pression de façon que le jet (50-51) atteigne la pièce (9) et qu'on contrôle par les moyens télévisuels (26, 27) la position de la pièce (9) après action du jet.

2. Procédé de contrôle suivant la revendication 1, caractérisé par le fait que le jet (50-51) a un diamètre compris entre 1 et $3 \times 10^{-3}$ m et une pression comprise entre 40 et 100 MPa.

3. Procédé de contrôle suivant la revendication 2, caractérisé par le fait que le jet a un diamètre voisin de $1,3\ 10^{-3}$ m et une pression voisine de 50 MPa.

4. Procédé de contrôle suivant l'une quelconque des revendications 1, 2 et 3, caractérisé par le fait que la pièce de petites dimensions est un ensemble (9) comportant une broche de guidage (15) et un écrou (16) fixés sur la bride inférieure (8) d'un tube guide (1) des équipements internes supérieurs d'un réacteur nucléaire à eau sous pression, le tube guide constituant la structure sur laquelle est fixée la pièce de petites dimensions.

5. Procédé de contrôle suivant la revendication 4, caractérisé par le fait que le moyen d'injection (30) est introduit dans le tube guide (1) par sa partie centrale, entre des fourreaux de guidage (12a).

6. Dispositif de contrôle à distance et sous eau d'une pièce de petites dimensions d'un réacteur nucléaire à eau sous pression, dans le cas où la pièce de petites dimensions étant une broche de centrage (9) d'un tube guide (1) des équipements internes supérieurs du réacteur, le dispositif comportant, de façon connue, des moyens télévisuels (26, 27) et ses moyens de déplacement dans le tube guide placé sous eau à la verticale, caractérisé par le fait qu'il comporte en outre un tube (30) dont le diamètre extérieur est inférieur à la largeur de l'espace entre des fourreaux (12a) à 90° du tube (1), solidaire à sa partie inférieure d'une bague d'appui (45) d'un diamètre extérieur sensiblement égal à l'espace entre des fourreaux (12a) à 90° et un ensemble (40-41-42) comportant un tube d'injection (40) d'eau sous pression muni d'une buse (49) d'un diamètre inférieur à $3 \times 10^{-3}$ m à sa partie inférieure monté coulissant dans le tube (30) dans sa direction axiale et rotatif dans ce tube autour de son axe, des moyens (28, 29) de déplacement du tube (30) dans la direction verticale et des moyens de déplacement axial et de pivotement par rapport au tube (30) de l'ensemble (40-41-42) qui est relié par une conduite à une installation de pompage sous haute pression (31), lesdits moyens télévisuels servant à contrôler la position de la pièce (9) après action du jet d'eau engendré par la buse (49).

7. Dispositif de contrôle suivant la revendication 6, caractérisé par le fait que l'ensemble (40-41-42) comporte en plus du tube d'injection (40), un tube de rigidification (41) relié au tube (40) par des entretoises (42) de façon que les axes des tubes (40 et 41) soient parallèles et que leurs génératrices les plus éloignées soient à une distance l'une de l'autre sensiblement égale au diamètre intérieur du tube (30).

**Claims**

1. Process for the remote underwater monitoring of a small-size component (9) of a nuclear reactor, to monitor the state of the connection between this component (9) and a structure (1), in which it is arranged in an almost inaccessible position, in particular by televisual means, characterized in that a means (30-40) of injecting water at a pressure higher than 40 MPa and in the form of a straight jet (50-51) of a diameter less than $3 \times 10^{-3}$ m is introduced into the structure (1) immersed in water, in the vicinity of the component (9) to be monitored, the injection means (40) is directed towards the component (9) to be monitored, water is injected under pressure in such a way that the jet (50-51) reaches the component (9), and the position of the component (9) after the action of the jet is monitored by the televisual means (26, 27).

2. Monitoring process according to Claim 1, characterized in that the jet (50-51) has a diameter of between 1 and $3 \times 10^{-3}$ m and a pressure of between 40 and 100 MPa.

3. Monitoring process according to Claim 2, characterized in that the jet has a diameter in the neighbourhood of 1.3 × 10⁻³ m and a pressure in the neighbourhood of 50 MPa.

4. Monitoring process according to any one of Claims 1, 2 and 3, characterized in that the small-size component is an assembly (9) comprising a guide pin (15) and a nut (16) which are fastened to the lower flange (8) of a guide tube (1) for the upper internal equipment of a pressurized-water nuclear reactor, the guide tube constituting the structure to which the small-size component is fastened.

5. Monitoring process according to Claim 4, characterized in that the injection means (30) is introduced into the guide tube (1) via its central part between guide sleeves (12a).

6. Device for the remote underwater monitoring of a small-size component of a pressurized-water nuclear reactor, where the small-size component is a centring pin (9) of a guide tube (1) for the upper internal equipment of the reactor, the device having in a known way televisual means (26, 27) and means of displacing the latter in the guide tube arranged vertically under water, characterized in that the device also has a tube (30), the outside diameter of which is less than the width of the space between 90° sleeves (12a) of the tube (1), integral in its lower part with a bearing ring (45) of an outside diameter substantially equal to the space between 90° sleeves (12a) and an assembly (40-41-42) having a tube (40) for injecting water under pressure provided with a nozzle (49) of a diameter less than 3 × 10⁻³ m in its lower part and mounted slideably in the tube (30) in its axial direction and rotatably in this tube about its axis, means (28, 29) of displacing the tube (30) in the vertical direction and means of axial displacement and pivoting relative to the tube (30) of the assembly (40-41-42) which is connected to a high-pressure pumping system (31) by means of a pipeline, the said televisual means serving to monitor the position of the component (9) after the action of the water jet produced by the nozzle (49).

7. Monitoring device according to Claim 6, characterized in that the assembly (40-41-42) has, in addition to the injection tube (40), a stiffening tube (41) connected to the tube (40) by means of spacers (42), in such a way that the axes of the tubes (40 and 41) are parallel and that their farthest spaced generatrices are at a distance from one another which is substantially equal to the inside diameter of the tube (30).

**Patentansprüche**

1. Verfahren für die Kontrolle eines Kernreaktorbauteils (9) von kleinen Abmessungen aus der Entfernung und unter Wasser zum Überprüfen des Zustandes der Verbindung dieses Bauteils (9) mit einer Struktur (1), in der es sich in einer schlecht zugänglichen Position befindet, insbesondere mit fernsehtechnischen Mitteln, dadurch gekennzeichnet, daß

— in die in das Wasser eingetauchte Struktur (1) in der Nachbarschaft des zu überprüfenden Bauteils (9) eine Einrichtung (30-40) für eine Injektion von Wasser unter einem Druck von mehr als 40 MPa und in Form eines geradlinigen Strahls (50-51) mit einem Durchmesser von weniger als 3 × 10⁻³ m eingeführt wird,

— die Injektionseinrichtung (40) auf das zu überprüfende Bauteil (9) ausgerichtet wird,

— Wasser unter Druck derart injiziert wird, daß der Strahl (50-51) das Bauteil (9) erreicht, und

— die Position des Bauteils (9) nach der Einwirkung des Strahl mit den fernsehtechnischen Mitteln (26, 27) überprüft wird.

2. Verfahren nach Anspruch 1, dadurch gekennzeichnet, daß der Strahl (50-51) einen Durchmesser zwischen 1 und 3 × 10⁻³ m und einen Druck zwischen 40 und 100 MPa aufweist.

3. Verfahren nach Anspruch 2, dadurch gekennzeichnet, daß der Strahl einen Durchmesser nahe 1,3 × 10⁻³ m und einen Druck nahe 50 MPa aufweist.

4. Verfahren nach einem der Ansprüche 1, 2 und 3, dadurch gekennzeichnet, daß das Bauteil von kleinen Abmessungen ein Komplex (9) ist, der einen Führungsstift (15) und eine Mutter (16) umfaßt, die an dem unteren Flansch (8) eines Führungsrohres (1) der oberen Inneneinrichtung eines Druckwasser-Kernreaktors befestigt sind, wobei das Führungsrohr die Struktur darstellt, an der das Bauteil von kleinen Abmessungen festgelegt ist.

5. Verfahren nach Anspruch 4, dadurch gekennzeichnet, daß die Injektionseinrichtung (30) in das Führungsrohr (1) durch dessen zentralen Teil zwischen Führungsstulpen (12a) eingeführt wird.

6. Vorrichtung für die Kontrolle eines kleine Abmessungen aufweisenden Bauteiles eines Druckwasser-Kernreaktors aus der Entfernung und unter Wasser, wobei in dem Falle, daß das Bauteil von kleinen Abmessungen ein Zentrierstift (9) eines Führungsrohres (1) der oberen Inneneinrichtung des Reaktors ist, die Vorrichtung in bekannter Weise fernsehtechnische Mittel (26, 27) und Mittel zu ihrer Verschiebung in dem unter Wasser vertikal angeordneten Führungsrohr aufweist, dadurch gekennzeichnet, daß sie weiter ein Rohr (30), dessen Außendurchmesser kleiner ist als die Breite des Zwischenraumes zwischen unter 90° verlaufenden Stulpen (12a) des Rohres (1) und das an seinem unteren Teil mit einem Stützring (45) von dem Zwischenraum zwischen den unter 90° verlaufenden Stulpen (12a) im wesentlichen gleichem Durchmesser fest verbunden ist, und einen Komplex (40-41-42) aufweist, der ein Rohr (40) für eine Injektion von Wasser unter Druck, das an seinem unteren Teil mit einer Düse (49) mit einem Durchmesser von weniger als 3 × 10⁻³ m versehen ist und sich in dem Rohr (30) in dessen Achsrichtung verschieben und um seine Achse verdrehen läßt, Mittel (28, 29) zum Verschieben des Rohres (30) in vertikaler Richtung und Mittel zum axialen Verschieben und Schwenken des Komplexes (40-41-42) gegenüber dem Rohr (30) umfaßt, wobei der Komplex über eine Leitung mit einer Hochdruckpumpeinrichtung (31) verbunden ist und die fernsehtechnischen Mittel zum Überprüfen der Position des Bauteils (9) nach der Einwirkung des von der Düse (49) erzeugten Wasserstrahls dienen.

7. Vorrichtung nach Anspruch 6, dadurch gekennzeichnet, daß der Komplex (40-41-42) außer dem Injektionsrohr (40) ein Versteifungsrohr (41) aufweist, das mit dem Rohr (40) in solcher Weise über Zwischenstücke (42) verbunden ist, daß die Achsen der Rohre (40 und 41) parallel verlaufen und ihre am weitesten voneinander entfernten Erzeugenden einen gegenseitigen Abstand aufweisen, der im wesentlichen gleich dem Innendurchmesser des Rohres (30) ist.

FIG.1

FIG. 2

FIG. 3a

## FIG. 3b

## FIG. 4

FIG. 5

## FIG.6